# FASCICULE DE BREVET EUROPEEN

(11) **EP 3 301 023 B1**
(45) Date de publication et mention de la délivrance du brevet: **24.07.2019**
(21) Numéro de dépôt: 17193863.2
(22) Date de dépôt: 28.09.2017
(51) Int. Cl.: B64D 11/06, B64D 11/00

(54) **FAUTEUILS DE VEHICULE A COQUE D'HABILLAGE MODULABLE**
FAHRZEUG-SCHALENSESSEL MIT MODULIERBARER VERKLEIDUNG
VEHICLE CHAIRS WITH MODULAR COVERING SHELL

(30) Priorité: 28.09.2016 FR 1659158
(43) Date de publication de la demande: 04.04.2018
(73) Titulaire: Stelia Aerospace, 17300 Rochefort (FR)
(72) Inventeur: RODRIGUEZ, Frédéric, 17300 Rochefort (FR)
(74) Mandataire: Ipside

(56) Documents cités:
- EP-A2- 2 457 831
- WO-A1-03/013903
- WO-A1-2006/059118
- WO-A1-2008/017763
- DE-A1-102004 063 094

## Description

### DOMAINE DE L'INVENTION

L'invention appartient au domaine de l'aménagement des espaces passagers des véhicules et plus particulièrement des aéronefs.

L'invention concerne en particulier des sièges de véhicules comportant une coque d'habillage destinée à protéger mécaniquement et visuellement les parties mécaniques d'un siège et ou à produire un effet d'espace privé pour l'occupant du siège.

Plus particulièrement dans le siège de l'invention la structure de la coque d'habillage est conçue pour permettre lors de la fabrication une personnalisation tardive et modifiable de la coque et des capacités de réparations rapides et simples de la coque.

### ART ANTERIEUR

Dans le domaine du transport de passagers, en particulier des aéronefs, les sièges proposés aux passagers sont des équipements ayant un fort impact commercial.

Les compagnies aériennes qui exploitent les aéronefs sont donc exigeantes non seulement en confort mais également en effet visuel et en esthétique des sièges.

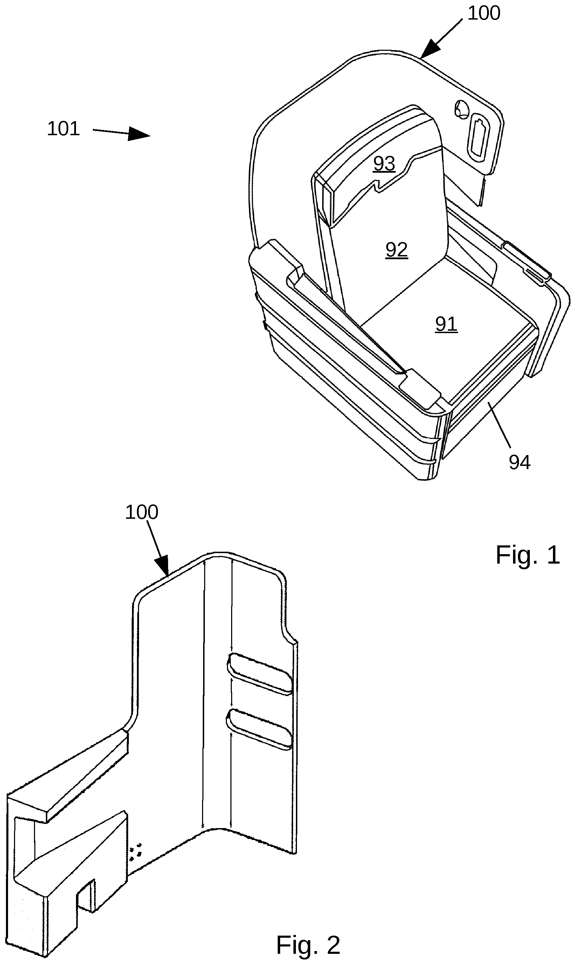

Un siège, au moins pour les classes proposant un niveau de confort amélioré tel que le siège 101 illustré sur la figure 1, est un équipement complexe, dans lequel l'assise 91, le dossier 92 et, lorsque le siège en est pourvu comme illustré, la têtière 93 et le repose jambes 94, sont généralement des parties mobiles entre elles pour donner au siège différentes positions de confort.

Un siège comporte, dans certains cas, une coque 100 qui recouvre en général l'arrière du siège et partiellement au moins les bords latéraux du siège. La coque, qui isole les parties mécaniques du siège, décore le siège et la cabine et apporte le confort d'un espace privatif au passager en particulier dans les phases de repos.

La coque 100 forme donc une partie essentielle et visible du siège, laquelle est le plus souvent utilisée pour mettre en valeur les couleurs de la compagnie et ou pour assurer une décoration en harmonie avec les autres habillages de la cabine de l'aéronef.

En outre, pour les mêmes raisons, les coques présentant un dommage doivent être réparées ou remplacées à brefs délais.

Les coques actuelles(voir aussi WO-A-2008/017763), comme par exemple la coque partiellement représentée sur la figure 2, sont réalisées intégralement pour être rigides et auto-porteuses, le plus souvent sous la forme d'un sandwich réalisé en forme, de sorte à obtenir un ensemble de forme stable dans les conditions d'utilisation. Elles sont réalisées avec les formes voulues, et portent toutes les finitions, en particulier les couleurs, dessins et reliefs, pour être intégrées aux autres parties du siège devant être fixé dans la cabine.

La complexité de ces coques, pour lesquelles il peut être demandé des formes non développables, contrairement à l'exemple de coque de la figure 2 pour la partie en panneau, rend leur fabrication délicate et nécessite un cycle de fabrication relativement long pour prendre en compte la définition de la coque demandée par l'exploitant de l'aéronef, définition qui comporte les formes, les couleurs et les décorations, mais également les positions des accessoires mis à disposition du passager.

Ces délais nécessaires sont souvent contraignants et remis en cause lorsque la définition voulue est donnée ou modifiée tardivement dans le processus de fabrication des sièges et des coques d'habillage.

Il est également possible que la définition soit modifiée alors que les sièges sont déjà installés dans une cabine, par la volonté de l'exploitant de l'aéronef, qui souhaite modifier l'ambiance de la cabine, ou encore par changement de celui-ci lorsque l'aéronef est repris par un autre exploitant.

Ces changements ou modifications des exigences conduisent, lorsque les coques ont été fabriquées ou sont dans un état avancé de leur fabrication, à la nécessité de fabriquer de nouvelles coques, ou pour le moins à modifier, dans la mesure de ce qui est économiquement et techniquement acceptable, significativement les coques déjà produites.

L'impact économique et sur les cycles de fabrication ou modification est alors un paramètre important.

En outre les coques des sièges sont exposées en exploitation à des agressions, par exemples des chocs de valises ou de chariots, pouvant les endommager. Dans ce cas il est nécessaire de réparer ou remplacer la coque pour maintenir la sécurité et la cabine en bon état esthétique.

Les coques d'habillage des sièges actuels sont donc pénalisantes en raison de leurs structures intégrales très difficilement modifiables, tant lors de leurs cycles de fabrication que pour les opérations de maintenance.

### PRÉSENTATION DE L'INVENTION

La présente invention apporte une solution aux défauts constatés des solutions connue au moyen d'un siège comportant un fauteuil et une coque d'habillage. La coque comporte une face intérieure du côté dudit fauteuil, c'est-à-dire la face de la coque visible par un occupant du siège, et une face extérieure située sur une face opposée de la coque, ladite coque enveloppant partiellement le fauteuil.

En outre, la coque comporte :
- une ossature structurale déterminant un maillage résultant de membrures assemblées, chacune des mailles dudit maillage correspondant à un espace de l'ossature sans membrure matérialisé par des membrures périphériques de ladite maille. L'ossature détermine une forme d'ensemble, dans l'espace, de la coque ;
- un ensemble de panneaux de finition, formant une peau recouvrant l'ossature, les dits panneaux de finition étant fixés sur les faces intérieure et extérieure de la coque, et dans lequel ensemble de panneaux de finition chaque panneau de finition :
   - recouvre au moins une maille ;
   - s'appuie sur toutes ou parties des membrures de la ou des mailles qu'il recouvre.

Il est ainsi possible de réaliser un siège dont la coque est simple à réaliser, même avec une coque d'habillage du fauteuil de formes complexes ou non développables, sans exiger de moyens de production complexe et dont la masse est réduite en raison des volumes vides dans les mailles tout en conservant une rigidité nécessaire à l'environnement de la cabine dans laquelle est installé le siège, par exemple une cabine de véhicule telle qu'une cabine d'aéronef.

Dans une forme de réalisation, une structure d'au moins certaines membrures de l'ossature est réalisées dans un matériau composite formant des profilés creux.

Dans une forme de réalisation, une structure d'au moins certaines membrures de l'ossature est réalisées dans un matériau alvéolaire, tel qu'une mousse, par exemple par un procédé d'injection, d'estampage, de rotomoulage ou d'usinage, ledit matériau alvéolaire étant renforcé par incorporation de fibres minérales et ou organiques et ou métalliques.

Dans une forme de réalisation, une structure d'au moins certaines membrures de l'ossature est réalisées dans un matériau métallique, par formage de profilé et ou par usinage.

Il peut ainsi être mis en oeuvre, combinées ou non, des matériaux et des techniques connues pour la réalisation de membrures afin d'obtenir les masses minimales et les solidités adaptées des coques et afin de respecter les contraintes pouvant résulter d'un environnement particulier d'utilisation du siège.

Dans une forme de réalisation, l'ossature comporte des renforts et ou des points d'accrochage et ou des inserts pour fixer des accessoires du siège à la coque.

Qu'un de ces points soit utilisé ou non suivant le siège considéré, il est ainsi utilisé une ossature complète en terme de capacité d'installation des accessoires de sorte que la décision de disposer d'un accessoire optionnel sur le siège peut être prise tardivement dans le processus de fabrication du siège et que l'accessoire optionnel peut également être ajouté ultérieurement sur le siège qui en est dépourvu, sans que soit remis en cause l'ossature de la coque du siège.

Dans une forme de réalisation, des accessoires internes sont fixés à l'ossature de la coque à l'intérieur d'un volume de la coque délimité par la peau formée par les panneaux de finition recouvrant ladite ossature. Il est ainsi mis à profit les espaces creux des mailles maintenus entre les membrures pour installer des équipements, optionnels ou non, par exemple des cartes électroniques de contrôles nécessaire au fonctionnement de certains équipements du siège, par exemple pour des actionneurs électriques assurant les mouvements des parties articulées du siège, par exemple des cartes de communication avec un réseau de la cabine dans laquelle le siège est installé.

En particulier, les accessoires internes fixés à l'ossature à l'intérieure du volume de la coque appartiennent à l'une des catégories parmi : « des équipements électriques, des fils ou harnais électriques, des fibres ou harnais optiques, des conduites de distribution d'air ».

Dans une forme de réalisation, des accessoires externes sont fixés à l'ossature de la coque de sorte à être accessible par un occupant dudit siège ou d'un autre siège proche dudit siège. L'ossature permet en effet de réaliser des coques qui, tout en restant compactes et monolithiques lorsqu'elles sont assemblées, peuvent lors de leur conception prendre en compte les efforts introduits dans la structure de la coque par tous type d'accessoires d'un siège, en particulier par les dimensions des membrures et par les renforts locaux pouvant s'avérer nécessaires, et ceci sans que ne soit remis en cause les principes généraux de conception de la coque d'habillage du siège.

En particulier, les accessoires externes fixés à l'ossature appartiennent à l'une des catégories parmi : « des accoudoirs, des écrans vidéo, des éclairages, des prises d'écouteurs, des boîtiers de télécommande de mouvements du siège, des interfaces d'appel équipage, des capteurs ».

Dans une forme de réalisation, tout ou partie des panneaux de finition sont fixés sur l'ossature par des fixations réversibles apportant la possibilité de démonter lesdits panneaux de finition sans endommagement des dits panneaux.

Suivant cette forme de réalisation, les panneaux peuvent être assemblés tardivement dans le processus de fabrication des sièges sans remettre en cause les autres éléments du siège et de la coque.

Par exemple, tout ou partie des fixations réversibles sont des attaches à pression. Il est ainsi tiré bénéfice de la facilité et de la rapidité de montage et de démontage de ce type de fixation qui de plus assure le positionnement du panneau et ne nécessite généralement pas d'outillage spécialisé.

Par exemple, tout ou partie des fixations réversibles comporte un matériau adhésif thermofusible réalisant une soudure ou un collage entre l'ossature et la peau. Il est ainsi obtenu des fixations sûres et présentant peut de risque d'arrachement accidentel tout en restant invisible sur les surfaces extérieures de la peau de la coque.

Avantageusement, dans ce cas, l'ossature comporte, au moins localement à des emplacements auxquels des panneaux sont fixés à l'ossature, un élément dans un matériau ferromagnétique pouvant être échauffé par induction magnétique. Un tel élément ferromagnétique peut être formé par un insert dans l'ossature de sorte à permettre un chauffage par induction de l'insert, et la fusion d'un matériau telle qu'une colle thermofusible qui est chauffé lors de la fixation ou de la dépose d'un panneau de finition, au moyen d'un outillage comportant une bobine générant un champ magnétique variable.

L'invention concerne également une famille de sièges conformes aux sièges de l'invention, comportant au moins deux sous-familles.

La famille est caractérisée par un modèle d'ossature commun à tous les sièges de la famille.

Une sous famille est caractérisée, dans la famille, par un ensemble de panneaux de finitions de définition identique pour tous les sièges de la sous-famille et différent pour les sièges des autres sous-familles.

Il est ainsi obtenu une famille dont les sièges mettent en oeuvre une même ossature, mais pour lesquels des ensembles différents de panneaux de finition permettent de personnaliser les sièges de la famille en différentes sous familles.

Dans une forme de mise en oeuvre, la définition d'un ensemble de panneaux de finition comporte pour chacun des panneaux de finition : les formes géométriques, et ou des couleurs, et ou des décorations.

Il est ainsi possible d'adapter les sièges à des exigences de forme et d'harmonie tout en restant dans une même famille de sièges.

Dans une forme de mise en oeuvre, la définition d'un ensemble de panneaux de finitions est différente suivant que la sous-famille de sièges considérée comporte ou non un accessoire optionnel fixé à la coque.

### PRÉSENTATION DES FIGURES

L'invention est décrite en référence aux figures qui sont données à titre d'exemple non limitatif d'un mode de réalisation de l'invention, qui représente de manière schématique :
Figure 1 : déjà citée, en vue isométrique un exemple de siège connu comportant une coque d'habillage formant principalement une paroi arrière et des parois latérales enveloppant partiellement le siège ;
Figure 2 : déjà citée, en vue isométrique un exemple d'un élément de coque d'habillage connu de forme développable, isolé du siège, représenté partiellement et correspondant à un côté et à une partie de l'arrière de la coque d'un siège connu ;
Figure 3 : en vue isométrique, un siège suivant l'invention comportant une coque d'habillage de forme complexe, non développable, et supportant des accessoires du siège ;
Figure 4 : en vue isométrique, une ossature de coque de siège suivant l'invention et montrant sans la présence des panneaux de finition, la structure interne de la coque. Le médaillon (a) représente l'ossature suivant une vue isométrique depuis l'arrière et sans les accessoires représentés sur la figure principale ;
Figure 5 : une vue isométrique éclatée, incomplète, d'une coque d'habillage de siège suivant l'invention et le principe de l'assemblage des panneaux de finition sur l'ossature avec l'assistance d'un robot ;
Figure 6 : une vue isométrique d'une ossature de coque d'habillage avant montage des panneaux de finition et illustrant la mise en place d'un harnais électrique ou optique.

Il doit être noté que les différents dessins sont des exemples ne représentant pas nécessairement des parties de mêmes modèles de sièges ou de parties de siège.

Sur les différents dessins, qui peuvent être à des échelles différentes, ou sur un même dessin, des parties similaires réalisant la même fonction, même de formes différentes, sont identifiées par un même repère.

### DESCRIPTION D'UN MODE DÉTAILLÉ DE REALISATION DE L'INVENTION

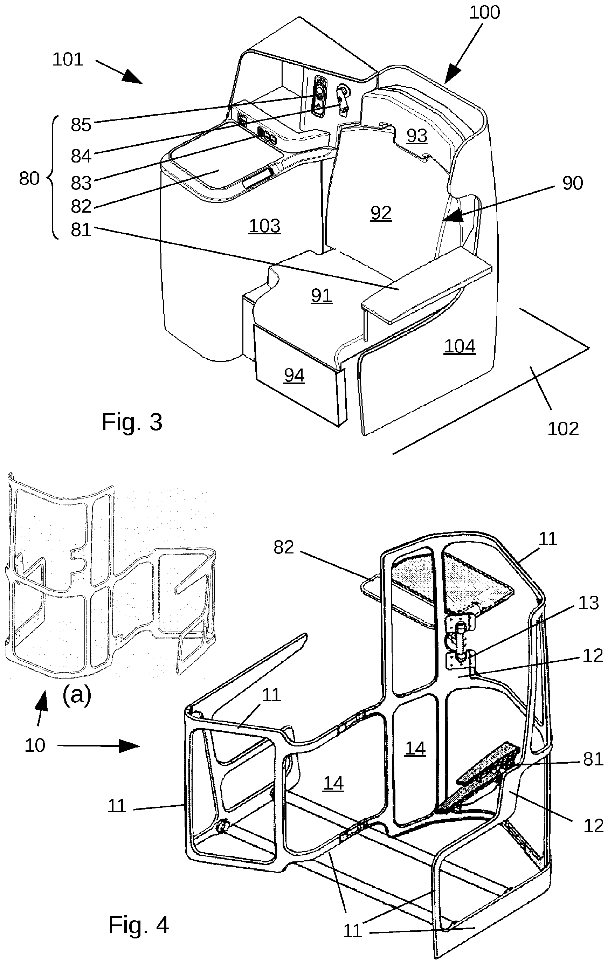

La figure 3 montre un exemple de siège 101 selon l'invention pour cabine d'aéronef représentée par un plancher 102 de la cabine sur lequel ledit siège est fixé.

Le siège 101 est ici représenté seul pour la clarté de l'illustration, mais il est naturellement destiné à être, au moins dans un aménagement conventionnel de cabine d'avion commercial, associé à d'autres sièges, généralement en rang successifs et en rangées juxtaposées.

Le siège pour les besoins de la description comporte principalement un fauteuil 90, une coque d'habillage 100, et des accessoires 80.

De manière conventionnelle, le fauteuil 90, dans sa forme illustrée, comporte une assise 91, un dossier 92, une têtière 93, un repose jambes 94, ces deux dernières parties du fauteuil n'étant pas présentes sur tous les modèles de sièges. Pour s'adapter au confort d'un passager, ces différentes parties du fauteuil sont généralement mobiles entre elles par des actions du passager, avec ou sans assistance électrique.

Il existe de nombreuses formes et variantes connues de tels sièges. Les détails de conception du siège du fauteuil de l'invention ne sont pas l'objet de la présente invention et il ne sera pas détaillé plus avant de structure du fauteuil.

Il sera cependant par la suite fait référence autant que de besoin aux parties du fauteuil 90 lorsqu'il sera considéré que ces références sont utiles à la clarté de l'exposé de l'invention.

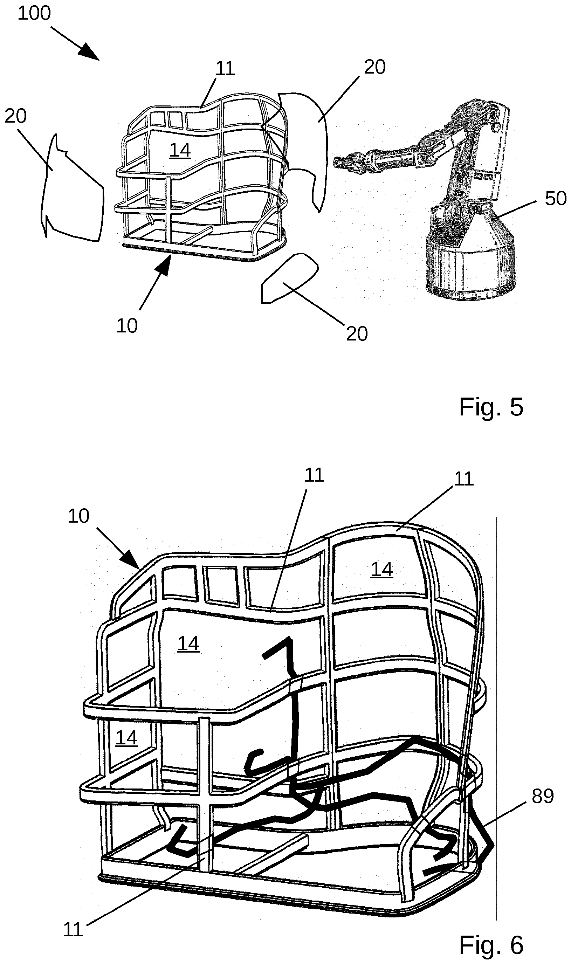

La figure 5 montre partiellement la structure d'une coque d'habillage 100, éclatée, d'un siège d'aéronef.

Comme illustré sur la figure, la structure de la coque d'habillage 100 comporte principalement une ossature 10 et des panneaux de finition 20. Sur la figure 5 ne sont représentés que quelques panneaux de finition 20, détachés de l'ossature 10, parmi un ensemble de panneaux de finition mis en oeuvre pour la coque.

L'ossature 10, représentée sans panneaux de finition sur la figure 4, forme un ensemble structural rigide dont des membrures 11 déterminent des lignes générales de la forme voulue de la coque d'habillage 100.

Plus particulièrement les membrures 11 sont formées suivant des lignes constantes pour une famille de coques pouvant être de formes finies différentes comme il sera compris de la suite de la description.

Les membrures 11 sont liées rigidement entre elles pour assurer une stabilité de forme de l'ossature 10 et constituent ainsi un maillage dans l'espace qui correspond à une structure interne de la coque d'habillage 100 et à un maillage structural de ladite coque d'habillage.

Les membrures 11 de l'ossature 10 peuvent être réalisées indépendamment les unes des autres puis assemblées pour constituer ladite ossature.

Toutes ou parties des membrures d'une ossature peuvent également être réalisées intégralement de sorte que le nombre de liaisons d'assemblage pour obtenir l'ossature est limité.

Les membrures 11 sont avantageusement réalisées dans un matériau composite formant des profilés creux, structure apportant un rapport résistance sur masse favorable aux applications aéronautiques.

Les membrures 11 peuvent également être réalisées dans un matériau alvéolaire tel qu'une mousse par exemple par un procédé d'injection, d'estampage, de rotomoulage ou encore d'usinage, le matériau étant autant que de besoin renforcé par incorporations de fibres minérales, organiques ou métalliques.

Les membrures 11 peuvent aussi être réalisées par deux demi peaux composites assemblées entre elles par collage ou soudure formant par la suite une structure creuse, résistante et légère.

Les membrures peuvent également être réalisées dans un matériau métallique, par formage de profilé ou par usinage.

Il doit être compris ici que les différentes techniques et les différents matériaux sont exposés ci-dessus à titre d'exemples non limitatifs et peuvent être combinés entre eux pour autant qu'ils soient techniquement compatibles entre eux.

En pratique le choix de matériaux et de procédés pour la réalisation d'une membrure ou d'un ensemble de membrures sera guidé, entre autre, par la complexité des formes à réaliser, par les efforts devant être repris par la structure formée par l'ossature, par le nombre de coques de la même famille devant être fabriquées et par l'outil industriel disponible pour fabriquer les ossatures.

L'ossature 10 comporte avantageusement des renforts locaux 12 et des inserts 13, destinés pour les premiers à reprendre des efforts concentrés devant être introduits dans ladite ossature et pour les seconds à former des points de fixation sur la coque 100, en particulier pour certains accessoires 80.

Le plus souvent, les efforts concentrés sont associés à des accessoires 80, et des inserts 13 sont dans ce cas placés au niveau des renforts locaux 12 correspondant pour fixer lesdits accessoires.

Les accessoires 80 peuvent être de formes et de fonctions variées. Un accessoire est par exemple un accoudoir 81 pour l'occupant du siège, une tablette 82, un écran vidéo, ou tout autre accessoire à la discrétion de l'exploitant et devant être fixé à la coque d'habillage du siège.

Les efforts concentrés se trouvent également, en général, au niveau de points de fixation par lesquels la coque est fixée, au fauteuil ou à une structure de l'aéronef.

Les efforts concentrés peuvent également correspondre à des emplacements particuliers de la coque 100, même en absence d'accessoire et de fixation, par exemple des zones de la coque prises comme appui par un passager lorsque celui-ci prend position dans le fauteuil ou se relève, ou des zones soumises à des efforts exceptionnels par exemple lors d'un crash suivant les conditions réglementaires.

Dans une forme avantageuse de réalisation, l'ossature 10 est réalisée avec l'ensemble des renforts et inserts nécessaires pour toute une famille de sièges définie par une ossature 10 de formes identiques, que ces renforts et inserts, au moins lorsqu'ils sont intégrés à la structure de ladite ossature soient ou non utilisés pour certains sièges d'une sous-famille de la famille en fonctions d'options de la sous-famille considérée.

Ainsi par exemple, un insert utilisé pour fixer un accessoire présent sur les sièges d'une sous-famille mais absent sur les sièges d'une autre sous-famille sera toujours intégré à l'ossature 10 ayant la même forme de sorte que la même ossature pourra être utilisée indifféremment pour la fabrication de sièges appartenant à l'une ou l'autre des deux sous-familles.

Les sièges d'une sous-famille ne comportant pas un accessoire optionnel sera en outre aisément convertible, du fait de l'existence de l'insert sur les ossatures, sans remettre en cause l'ossature 10 de la coque d'habillage 100 de chaque siège en question.

Comme signalé la coque d'habillage 100 comporte également des panneaux de finition 20.

Les panneaux de finition sont formés pour être fixés à l'ossature 10 et réalisent une peau de la coque.

Pour des raisons d'esthétique du siège, mais également pour des raisons d'entretien et de nettoyage, la coque d'habillage 100 d'un siège comporte de préférence des panneaux de finition 20 sur chacune des faces de l'ossature 10. Cet agencement détermine dans une épaisseur de coque d'habillage des volumes creux ou mailles 14 entre les membrures 11 sur les bords d'une maille et les panneaux de finition 20 recouvrant lesdites mailles sur des faces intérieure 103 et extérieure 104 de la coque 100.

Par convention, la face intérieure 103 de la coque correspond à la paroi située du côté du fauteuil 90, c'est-à-dire la face de la coque qui est vue par un occupant du siège. La face extérieure 104 de la coque est la face opposée à la face intérieure 103.

La distance séparant à un emplacement de la coque, et suivant une normale à la surface à l'emplacement considéré, la face intérieure de la face extérieur correspond donc à une épaisseur de la coque audit emplacement.

L'épaisseur de la coque 100 peut être adaptée en tout point de ladite coque en adaptant les dimension des membrures dans le sens de l'épaisseur, tout en mettant en oeuvre des panneaux de finition d'épaisseur sensiblement constante, a priori relativement mince.

Une face de l'ossature peut comporter un ou plusieurs panneaux de finition.

Le choix du nombre de panneaux de finition 20 dépend en particulier de la complexité des formes de la coque d'habillage 100 et des dimensions de ladite coque d'habillage, cependant un panneau de finition 20 recouvre au moins une maille 14 du maillage formé par l'ossature 10.

Avantageusement un panneau de finition 20 sera défini pour recouvrir plusieurs mailles 14 du maillage formé par l'ossature 10 afin de limiter le nombre de panneaux de finition et de raccords entre panneaux. Toutefois, les dimensions d'un panneau de finition seront limitées à une maille ou à un nombre restreint de mailles lorsque que ledit panneau a une forme complexe à réaliser, se combinant difficilement avec sa réalisation dans un panneau de grande taille, ou sera amené, potentiellement, à être démonté de manière fréquente dans la vie du siège. Cette dernière situation se rencontre en pratique pour des panneaux de finition situés dans des emplacements où les risques d'endommagement desdits panneaux, et donc de la nécessité de leurs réparations ou remplacements, sont relativement élevés, ou lorsque lesdits panneaux assurent également les fonctions de trappes de visite, notamment pour des opérations de contrôle ou de maintenance.

La forme apparente de la coque 100 est donc celle qui résulte de l'assemblage des panneaux de finition 20 sur l'ossature 10.

Pour des raisons principalement de stabilité et de tenue des panneaux de finition, un panneau de finition 20 s'appuie avantageusement sur toutes les membrures 11 des mailles 14 du maillage formé par l'ossature 10, qu'il recouvre.

La forme d'un panneau de finition 20 et sa position dans l'espace lié à un référentiel de la coque d'habillage 100 sont donc contraintes par les formes et positions des membrures 11 de l'ossature 10. Cependant, sous réserve de respecter cette contrainte, la forme d'un panneau de finition 20 est libre et peut donc être choisie par le concepteur dudit panneau de finition en fonction d'exigences techniques ou esthétiques particulières.

Ainsi, un panneau de finition 20 pourra présenter, entre les membrures 11, une surface visible plus ou moins plate, plus ou moins bombée, concave ou convexe, ou présenter des formes particulières telles que des aménagements, par exemple vide-poches.

Il doit être noté que des formes différentes peuvent être nécessaires pour correspondre au mieux aux fauteuils 90 des sièges auxquels la coque 100 est destinée, par exemple dans le cas de fauteuils comportant des options telles qu'une têtière 93 ou des coussins particuliers.

Egalement un panneau de finition 20 pourra présenter ou non des ouvertures pour le placement de fixations en particulier aux emplacements des inserts de l'ossature 10 et destinées à la fixation d'accessoires optionnels, par exemple un support. Les panneaux de finition ne comporteront alors l'ouverture pour placer une fixation que pour les coques 100 d'habillage comportant l'option concernée. Il est ainsi évité de mettre en place, sur les coques d'habillage ne comportant pas l'option, un bouchon ou un opercule qui peut être perdu ou retiré accidentellement en exploitation.

Dans ce cas, des coques 100 comportant des ossatures 10 identiques appartiennent à une même famille de coques d'habillage mais appartiennent à des sous-familles différentes lorsqu'elles comportent des ensembles de panneaux de finition différents, leurs conférant par exemple des apparences différentes.

Les panneaux de finition 20 sont fixés sur l'ossature 10 par tous moyens adaptés au maintien en exploitation desdits panneaux de finition sur ladite ossature.

Avantageusement les fixations (non représentées) seront choisies pour permettre le démontage des panneaux de finition 20 sans endommager lesdits panneaux de finition.

Avantageusement les moyens de fixation seront choisis pour être non visibles ou peu visible à la surface de la coque d'habillage 100.

Les moyens de fixation peuvent consister en des fixations mécaniques conventionnelles telles que des vis ou des systèmes vis-écrou prisonnier dit quart de tour. Dans ce cas l'ossature portera un écrou insert dans lequel la vis sera serrée. Bien que généralement visible, ce type de moyens de fixation est adapté au maintien d'un panneau de finition devant être fréquemment démonté et remonté.

Les moyens de fixation peuvent également mettre en oeuvre des fixations mécaniques à emboîtement du type clips.

Les moyens de fixation peuvent également mettre en oeuvre des combinaisons de tissus auto-agrippant, par exemple de la marque Velcro ®, qui est adapté au maintien de panneaux légers.

Les moyens de fixation peuvent également mettre en oeuvre un collage ré-activable par induction. Dans ce cas, l'ossature comporte par exemple des inserts dans un matériau ferromagnétique recouverts d'une colle thermofusible qui peut être chauffée par induction magnétique lors de la fixation d'un panneau de finition, au travers de la paroi formée par ledit panneau de finition, ou de son retrait.

La pose ou la dépose de panneaux de finitions 20 sur une ossature 10 peut être réalisée par des opérations manuelles ou par un robot 50 comportant les effecteurs adaptés pour prendre, placer et fixer les panneaux de finition.

Les panneaux de finition 20 sont réalisés de manière connue dans un matériau de faible épaisseur, par rapport à l'épaisseur de la coque 100 dont il forme la peau, aux dimensions et formes voulues.

Avantageusement les panneaux sont fabriqués dans un matériau thermoformable, par exemple un polycarbonate ou un composite à matrice thermoplastique, qui permet de réaliser par thermoformage sur un moule des formes complexes, en particulier des formes non développables.

Les panneaux peuvent également être réalisé en matériaux composites à matrice thermodure, une résine polymérisée par une cuisson.

Dans une forme de réalisation, les panneaux de finition sont formés dans une peau fine décorée par un film thermogainé.

Le plus souvent les sièges 101, au moins dans les classes supérieures, sont pourvus d'équipements, fixés au fauteuil 90 ou à la coque d'habillage 100, devant être connectés à un câblage électrique ou optique. De tels équipements sont par exemples des écrans vidéo, des éclairages 84, des prises d'écouteurs 83, des boîtiers de télécommande 85 des mouvements du siège, des interfaces d'appel équipage, des capteurs, liste non exhaustive.

Dans une forme de réalisation les câblages correspondant seront montés sous la forme de harnais 89, illustré sur la figure 6 en cours d'installation, dans la coque d'habillage 100, avantageusement entre les panneaux de finitions 20 situés sur les faces opposées de ladite coque d'habillage.

La coque du siège de l'invention s'avère ici encore particulièrement avantageuse en permettant une installation facile et en protégeant mécaniquement les fils du harnais dans un espace clos, en rendant ces fils totalement invisible dans la cabine où est installé le siège mais en laissant, par la démontabilité des panneaux de finition, un accès aisé pour des opérations de maintenance telles que changement du harnais, réparation ou remplacement un fil, ajout d'un fil suite à une évolution de la définition du siège.

En production, le montage de panneaux de finition personnalisés peut être effectué tardivement dans le processus industriel de fabrication de la coque et par la même de réduire les cycles de fabrication permettant un choix plus tardif de l'exploitant dans les décors et autres options qu'il souhaite voir appliqués sur ses sièges.

En exploitation, la démontabilité des panneaux de finition permet de changer simplement la décoration d'une cabine par un remplacement des panneaux sans remettre en cause l'ossature 10, partie travaillante de la coque 100 d'habillage, changement qui peut être réalisé par des ateliers de maintenance de l'exploitant.

La fabrication d'une coque comporte les étapes principales suivantes :
- sélection d'une ossature 10 pour la famille de coques d'habillages à laquelle appartient le siège auquel est destinée la coque d'habillage 100 ;
- pose des panneaux de finition 20 correspondant aux options de la sous-famille à laquelle appartient le siège auquel est destinée la coque d'habillage ;
- le cas échéant, au moins avant la pose des panneaux de finition qui interdirait le montage d'équipements dans la coque d'habillage, pose des équipements dans la coque d'habillage correspondant aux options de la sous-famille à laquelle appartient le siège auquel est destinée la coque d'habillage ;
- le cas échéant, au moins avant la pose des panneaux de finition qui interdirait le montage du harnais, pose du harnais correspondant aux options de la sous-famille à laquelle appartient le siège auquel est destinée la coque d'habillage ;
- pose des accessoires 80 extérieurs fixés à la coque d'habillage de la famille et ceux correspondant aux options de la sous-famille à laquelle appartient le siège auquel est destinée la coque d'habillage.

Il convient de noter que cette dernière étape peut être réalisée en tout ou partie lorsque la coque d'habillage et le fauteuil sont assemblés, par nécessité de montage ou par commodité de montage.

## Revendications

1. Siège (101) comportant un fauteuil (90) et une coque (100) d'habillage, ladite coque comportant une face intérieur du côté du dit fauteuil et une face extérieure située sur une face opposée de ladite coque, ladite coque enveloppant partiellement le fauteuil, **caractérisé en ce que** la coque comporte :
- une ossature (10) structurale déterminant un maillage résultant de membrures (11) assemblées, chacune des mailles (14) dudit maillage correspondant à un espace de l'ossature sans membrure matérialisée par des membrures périphériques de ladite maille, et déterminant une forme d'ensemble, dans l'espace, de la coque (100) ;
- un ensemble de panneaux de finition (20), formant une peau recouvrant l'ossature (10), lesdits panneaux de finition étant fixés à ladite ossature pour former les faces intérieure et extérieure de la coque, et dans lequel ensemble de panneaux de finition chaque panneau de finition :
- recouvre au moins une maille (14) ;
- s'appuie sur toutes ou parties des membrures (11) de la ou des mailles qu'il recouvre.

2. Siège suivant la revendication 1 dans lequel une structure d'au moins certaines membrures (11) de l'ossature est réalisées dans un matériau composite formant des profilés creux.

3. Siège suivant la revendication 1 ou la revendication 2 dans lequel une structure d'au moins certaines membrures (11) de l'ossature est réalisées dans un matériau alvéolaire, tel qu'une mousse, par exemple par un procédé d'injection, d'estampage, de rotomoulage ou d'usinage, ledit matériau alvéolaire étant renforcé par incorporation de fibres minérales et ou organiques et ou métalliques.

4. Siège suivant l'une des revendications précédentes dans lequel une structure d'au moins certaines membrures (11) de l'ossature est réalisée dans un matériau métallique, par formage de profilé et ou par usinage.

5. Siège suivant l'une des revendications précédentes dans lequel l'ossature (10) comporte des renforts (12) et ou des points d'accrochage et ou des inserts (13) pour fixer des accessoires (80) du siège à la coque.

6. Siège suivant l'une des revendications précédentes dans lequel des accessoires internes sont fixés à l'ossature (10) de la coque à l'intérieur d'un volume de ladite coque délimité par la peau formée par les panneaux de finition (20) recouvrant ladite ossature.

7. Siège suivant la revendication 6 dans lequel les accessoires internes fixés à l'ossature (10) à l'intérieure du volume de la coque appartiennent à l'une des catégories parmi : « des équipements électriques, des fils ou harnais électriques, des fibres ou harnais optiques, des conduites de distribution d'air ».

8. Siège suivant l'une des revendications précédentes dans lequel des accessoires externes sont fixés à l'ossature (10) de la coque de sorte à être accessible par un occupant dudit siège ou d'un autre siège proche dudit siège.

9. Siège suivant la revendication 8 dans lequel les accessoires externes fixés à l'ossature (10) appartiennent à l'une des catégories parmi : « des accoudoirs (81), des écrans vidéo, des éclairages (84), des prises d'écouteurs (83), des boîtiers de télécommande (85) de mouvements du siège, des interfaces d'appel équipage, des capteurs ».

10. Siège suivant l'une des revendications précédentes dans lequel tout ou partie des panneaux de finition (20) sont fixés sur l'ossature (10) par des fixations réversibles apportant la possibilité de démonter lesdits panneaux de finition sans endommagement des dits panneaux.

11. Siège suivant la revendication 10 dans laquelle tout ou partie des fixations réversibles sont des attaches à pression.

12. Siège suivant la revendication 10 ou la revendication 11 dans lequel tout ou partie des fixations réversibles comporte un matériau adhésif thermofusible réalisant une soudure ou un collage entre l'ossature et la peau.

13. Siège suivant la revendication 12 dans lequel l'ossature comporte, au moins localement à des emplacements auxquels des panneaux (20) sont fixés à l'ossature (10), un élément dans un matériau ferromagnétique pouvant être échauffé par induction magnétique.

14. Famille de sièges conformes à l'une des revendications précédentes, comportant au moins deux sous-familles, ladite famille étant **caractérisée par** un modèle d'ossature (10) commun à tous les sièges de la famille, et une sous famille étant **caractérisée par** un ensemble de panneaux de finitions (20) de définition identique pour tous les sièges (101) de la sous-famille et de définition différente pour les sièges des autres sous-familles.

15. Famille de sièges suivant la revendication 14 la définition d'un ensemble de panneaux de finition (20) comporte pour chacun des panneaux de finition : les formes géométriques, et ou des couleurs, et ou des décorations.

16. Famille de siège suivant la revendication 15 la définition d'un ensemble de panneaux de finition (20) est différente suivant que la sous-famille de sièges (101) considérée comporte ou non un accessoire optionnel fixé à la coque (100).

## Patentansprüche

1. Sitz (101), der einen Sessel (90) und eine Verkleidungsschale (100) umfasst, wobei die Schale eine Innenseite auf der Seite des Sessels und eine Außenseite umfasst, die auf einer gegenüberliegenden Seite der Schale liegt, wobei die Schale den Sessel teilweise umhüllt, **dadurch gekennzeichnet, dass** die Schale umfasst:
- einen Strukturrahmen (10), der ein Gitter bestimmt, das aus verbundenen Stegen (11) resultiert, wobei jede der Gitteröffnungen (14) des Gitters einem Raum des Rahmens ohne Steg entspricht, welcher von die Gitteröffnung umgebenden Stegen gebildet wird, und der eine Gesamtform der Schale (100) im Raum bestimmt;
- einen Satz Deckplatten (20), die eine Haut bilden, welche den Rahmen (10) bedeckt, wobei die Deckplatten am Rahmen befestigt werden, um die Innen- und Außenseite der Schale zu bilden, und in welchem Satz Deckplatten jede Deckplatte:
- mindestens eine Gitteröffnung (14) bedeckt;
- auf allen oder Teilen der Stege (11) der Gitteröffnung(en), die sie bedeckt, aufliegt.

2. Sitz nach Anspruch 1, wobei eine Struktur von mindestens gewissen Stegen (11) des Rahmens aus einem Hohlprofile bildenden Verbundmaterial hergestellt ist.

3. Sitz nach Anspruch 1 oder Anspruch 2, wobei eine Struktur von mindestens gewissen Stegen (11) des Rahmens aus einem zelligen Material, wie etwa einem Schaum, zum Beispiel durch ein Spritzguß-, Stanz-, Schleuderguß- oder Zerspanungsverfahren hergestellt ist, wobei das zellige Material durch Einbettung von mineralischen und/oder organischen und/oder metallischen Fasern verstärkt ist.

4. Sitz nach einem der vorstehenden Ansprüche, wobei eine Struktur von mindestens gewissen Stegen (11) des Rahmens aus einem metallischen Material, durch Bilden eines Profils und/oder durch Zerspanen hergestellt ist.

5. Sitz nach einem der vorstehenden Ansprüche, wobei der Rahmen (10) Verstärkungen (12) und/oder Einhängepunkte und/oder Einsätze (13) umfasst, um Zubehörteile (80) des Sitzes an der Schale zu befestigen.

6. Sitz nach einem der vorstehenden Ansprüche, wobei innere Zubehörteile im Inneren eines Volumens der Schale, das von der von den Deckplatten (20) gebildeten, den Rahmen bedeckenden Haut begrenzt wird, am Rahmen (10) der Schale befestigt werden.

7. Sitz nach Anspruch 6, wobei die im Inneren des Volumens der Schale am Rahmen (10) befestigten inneren Zubehörteile zu einer der Kategorien gehören aus: "elektrischen Ausrüstungen, elektrischen Drähten oder Kabelbäumen, optischen Fasern oder Kabelbäumen, Luftverteilungskanälen".

8. Sitz nach einem der vorstehenden Ansprüche, wobei äußere Zubehörteile derart am Rahmen (10) der Schale befestigt werden, dass sie für einen Nutzer des Sitzes oder eines anderen Sitzes nahe des Sitzes zugänglich sind.

9. Sitz nach Anspruch 8, wobei die am Rahmen (10) befestigten äußeren Zubehörteile zu einer der Kategorien gehören aus: "Armlehnen (81), Videobildschirmen, Beleuchtungen (84), Kopfhörerbuchsen (83), Gehäusen für eine Fernbedienung (85) für Bewegungen des Sitzes, Schnittstellen zum Rufen der Crew, Sensoren".

10. Sitz nach einem der vorstehenden Ansprüche, wobei alle oder ein Teil der Deckplatten (20) mit reversiblen Befestigungen am Rahmen (10) befestigt sind, die die Möglichkeit eröffnen, die Deckplatten ohne Beschädigung der Platten abzubauen.

11. Sitz nach Anspruch 10, wobei alle oder ein Teil der reversiblen Befestigungen Druckverschlüsse sind.

12. Sitz nach Anspruch 10 oder Anspruch 11, wobei alle oder ein Teil der reversiblen Befestigungen ein wärmeschmelzbares Haftmaterial umfassen, das eine Schweißnaht oder eine Verklebung zwischen dem Rahmen und der Haut herstellt.

13. Sitz nach Anspruch 12, wobei der Rahmen mindestens örtlich an Stellen, an denen Platten (20) am Rahmen (10) befestigt sind, ein Element aus einem ferromagnetischen Material umfasst, das durch magnetische Induktion erhitzt werden kann.

14. Sitzgruppe nach einem der vorstehenden Ansprüche, die mindestens zwei Untergruppen umfasst, wobei die Gruppe durch ein Rahmenmodell (10) gekennzeichnet ist, das allen den Sitzen der Gruppe gemein ist, und wobei eine Untergruppe durch einen Satz Deckplatten (20) gekennzeichnet ist, der bei allen den Sitzen (101) der Untergruppe von identischer Definition und bei den Sitzen der anderen Untergruppen von sich unterscheidender Definition ist.

15. Sitzgruppe nach Anspruch 14, wobei die Definition eines Satzes Deckplatten (20) für jede der Deckplatten umfasst: die geometrischen Formen und/oder Farben und/oder Dekore.

16. Sitzgruppe nach Anspruch 15, wobei sich die Definition eines Satzes Deckplatten (20) je nachdem unterscheidet, ob die betreffende Sitz-Untergruppe (101) ein an der Schale (100) befestigtes optionales Zubehörteil umfasst oder nicht.

## Claims

1. Seat (101) including a chair (90) and a covering shell (100), said shell including an internal face of the side of said chair and an external face situated on an opposite face of said shell, said shell partially surrounding the chair, **characterised in that** the shell includes:
- a structural framework (10) determining a resulting meshwork of assembled members (11), each of the meshes (14) of said meshwork corresponding to a space of the framework with no member marked out by peripheral members of said mesh, and determining an overall shape, in three-dimensional space, of the shell (100);
- a set of finishing panels (20), forming a skin covering the framework (10), said finishing panels being attached to said framework to form the internal and external faces of the shell, and in which set of finishing panels, each finishing panel:
- covers at least one mesh (14);
- rests on all or parts of the members (11) of the mesh(es) covered thereby.

2. Seat according to claim 1 wherein a structure of at least some members (11) of the framework is made of a composite material forming hollow sections.

3. Seat according to claim 1 or claim 2 wherein a structure of at least some members (11) is made of a cellular material, such as a foam, for example by means of an injection, stamping, rotational moulding or machining method, said cellular material being reinforced by incorporating mineral and/or organic and/or metal fibres.

4. Seat according to one of the preceding claims wherein a structure of at least some members (11) of the framework is made of a metallic material, by section forming and/or by machining.

5. Seat according to one of the preceding claims wherein the framework (10) includes reinforcements (12) and/or fastening points and/or inserts (13) for fastening accessories (80) of the seat to the shell.

6. Seat according to one of the preceding claims wherein internal accessories are fastened to the framework (10) of the shell inside a volume of said shell delimited by the skin formed by the finishing panels (20) covering said framework.

7. Seat according to claim 6 wherein the internal accessories fastened to the framework (10) inside the volume of the shell belong to one of the categories among: "electrical equipment, electrical wiring or harnesses, optical fibres or harnesses, air distribution ducts".

8. Seat according to one of the preceding claims wherein external accessories are fastened to the framework (10) of the shell so as to be accessible by an occupant of said seat or of another seat close to said seat.

9. Seat according to claim 8 wherein the external accessories fastened to the framework (10) belong to one of the categories among: "armrests (81), video screens, lights (84), earphone jacks (83), remote control units (85) of seat movements, crew call interfaces, sensors".

10. Seat according to one of the preceding claims wherein all or some of the finishing panels (20) are fastened to the framework (10) by reversible fasteners offering the possibility of dismantling said finishing panels without damaging said panels.

11. Seat according to claim 10 wherein all or some of the reversible fasteners are snap fasteners.

12. Seat according to claim 10 or claim 11 wherein all or some of the reversible fasteners include a hot-melt adhesive material creating a weld or a bond between the framework and the skin.

13. Skin according to claim 12 wherein the framework includes, at least locally at points at which panels (20) are fastened to the framework (10), an element made of a ferromagnetic material suitable for being heated by magnetic induction.

14. Family of seats according to one of the preceding claims, including at least two subfamilies, said family being **characterised by** a common framework (10) model to all the seats of the family, and a subfamily being **characterised by** a set of finishing panels (20) of identical definition for all the seats (101) of the subfamily and of different definition for the seats of the other subfamilies.

15. Family of seats according to claim 14 wherein the definition of a set of finishing panels (20) includes for each of the finishing panels: the geometric shapes, and/or colours, and/or decorations.

16. Family of seats according to claim 15 wherein the definition of a set of finishing panels (20) is different according to whether the subfamily of seats (101) in question includes an optional accessory fastened to the shell (100) or not.
